# EUROPEAN PATENT APPLICATION

(11) **EP 4 589 784 A1**
(43) Date of publication of application: **23.07.2025**
(21) Application number: 22947061.2
(22) Date of filing: 23.09.2022
(51) Int. Cl.: H01R 13/46, H01R 13/502, H01R 13/512, H01R 13/52, H01R 43/18, H01R 43/20, B60L 53/16

(54) **CHARGING GUN CAPABLE OF CHANGING COLOR ACCORDING TO CHANGES IN TEMPERATURE, AND MANUFACTURING METHOD THEREFOR**

(30) Priority: 15.09.2022 CN 202211120275
(71) Applicant: Suzhou Yihang Electronic Technology Co., Ltd., Suzhou, Jiangsu 215134 (CN)
(72) Inventor: YANG, Wei, Suzhou, Jiangsu 215134 (CN); YE, Ning, Suzhou, Jiangsu 215134 (CN); YANG, Tao, Suzhou, Jiangsu 215134 (CN); WANG, Jihua, Suzhou, Jiangsu 215134 (CN)
(74) Representative: Cabinet Chaillot
(86) International application number: PCT/CN2022/120925
(87) International publication number: WO 2024/031796

(57) **Abstract**

The invention discloses a charging gun that can realize changeable color according to temperature change and a preparation method thereof, relating to the field of charging gun, including a gun head with one end provided with silicone waterproof pad, the rear side of silicone waterproof pad is connected with terminal cover; interior of said terminal cover is connected with terminals, and outer side of the terminals are provided with terminal rubber coatings, one end of said terminals is connected with a terminal wiring harness. The invention realizes changeable color block different from the material used elsewhere, which adopts PC and temperature-sensitive material mixed injection molding, in the charging process of charging gun, phenomenon of heat will occur in the event of improper use or poor contact, at this time temperature change can be perceived through color change of gun shell so as to confirm using state of charging gun.

## Description

### 1. Technical Field

The invention relates to the technical field of charging gun, in particular to a charging gun that can realize changeable color according to temperature change and a preparation method thereof.

### 2. Background Art

The function of charging pile is similar to the fuel dispenser inside the gas station, which can be fixed on the ground or wall, installed in public buildings (public buildings, shopping malls, public parking lots, etc.) and residential parking lots or charging stations, and can charging for various models of electric automobiles according to different voltage levels; the input end of the charging pile is directly connected to the AC network, and the output end is equipped with charging gun for charging the electric automobiles.

Existing charging gun shell material is common and simplex, most of which are formed through injection molding in one shot, and at most a layer of soft rubber is wrapped around the shell, without temperature-sensitive role, and is not sensitive to the temperature change, so it's not easy for the on-site operators to find abnormal heating phenomenon in the using process of charging gun, for this reason there is a need for a charging gun which can change color according to the temperature change and a preparation method thereof.

### 3. Summary of the Invention

Base on the above background, the invention aims to provide a charging gun that can realize changeable color according to temperature change and a preparation method thereof to solve the problems in prior art, i.e. existing charging gun shell material is common and simplex, most of which are formed through injection molding in one shot, and at most a layer of soft rubber is wrapped around the shell, without temperature-sensitive role, and is not sensitive to the temperature change, it's not easy for the on-site operators to find abnormal heating phenomenon in the using process of charging gun.

In order to realize said purpose, the invention provides the following technical scheme: a charging gun that can realize changeable color according to temperature change and a preparation method thereof, including a gun head, one end of said gun head is provided with a silicone waterproof pad, and the rear side of the silicone waterproof pad is connected with a terminal cover; the interior of said terminal cover is connected with terminals, and the outer side of the terminals are provided with terminal rubber coatings, and one end of said terminals is connected with a terminal wiring harness; the outer side of the terminal located at the outer side of the terminal rubber coating is provided with a left gun shell, one side of the left gun shell is connected with a right gun shell, and the first riveting screw is provided between the left gun shell and the right gun shell, and the second riveting screw is connected between the left gun shell and the right gun shell on the side far away from the first riveting screw, and the outer side of both of left gun shell and the right gun shell are arranged with changeable color block.

Preferably, inside the terminal cover is provided with limiting holes, and the terminals penetrate through the limiting holes and extend to the inside of the gun head; there are a plurality groups of terminals and limiting holes.

Preferably, the top of said left gun shell and right gun shell are both provided with empty slots, and the empty slots are fixedly connected with the changeable color block by injection molding.

Preferably, the following steps are included:
Step 1: The gun shell is firstly injection molded as a whole, leaving the position of the changeable color block empty;
Step 2: completely filling the position of the changeable color block at the position of the changeable color block of the gun shell by secondary injection molding;
Step 3: assembling the gun head, silicone waterproof pad, terminal cover, terminal component, first riveting screw, second riveting screw, left gun shell, and right gun shell.

Preferably, filling material for said changeable color block in step 2 is selected from 50°C red temperature-sensitive material, 38°C orange temperature-sensitive material and PC injection molding material.

Preferably, said injection molding process is performing secondary injection molding to the PC injection molding material according to the ratio of 1:200 added with red and orange temperature-sensitive material to fill the position of the changeable color block completely.

Preferably, the integral injection molding of the gun shell in step 1 adopts PC material, and the injection molding adopts the traditional injection molding process of injection molding in one shot.

Compared with the prior art, the invention has the following advantages:
1. The invention realizes changeable color block different from the material used elsewhere through arranged gun head, silicone waterproof pad, terminal cover, terminal, first riveting screw, terminal rubber coatings, left gun shell, terminal wiring harness, second riveting screw, right gun shell and changeable color block; the changeable color block adopts PC and temperature-sensitive material mixed injection molding, in the charging process of the charging gun, phenomenon of heat will occur in the event of improper use or poor contact, at this time temperature change can be perceived through the change of the color of the gun shell so as to confirm the using state of charging gun, the purpose of temperature-sensitive color change is to prompt the operator of the charging gun status, and temperature abnormality is prompted through the color block change of the charging gun so as to ensure operator's safety.

### 4. Brief Description of Accompany Drawings

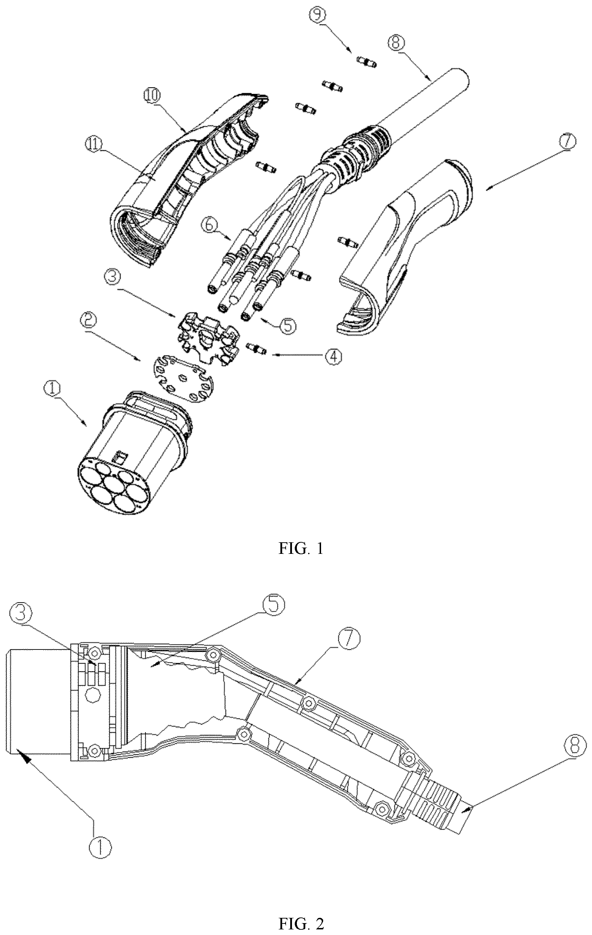

FIG. 1 is the structural diagram of the invention;
FIG. 2 is the sectional view of the invention;

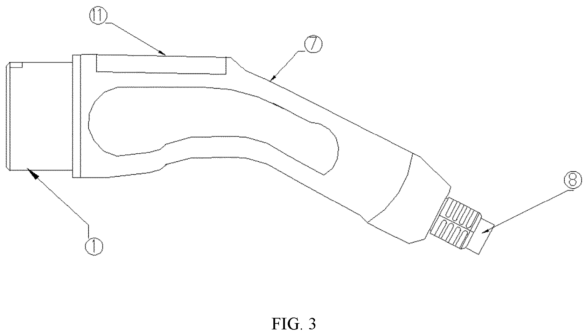

FIG. 3 is the front view of the invention.

As shown in the accompanying drawings: 1 gun head, 2 silicone waterproof pad, 3 terminal cover, 4 first riveting screw, 5 terminal, 6 terminal rubber coating, 7 left gun shell, 8 terminal wiring harness, 9 second riveting screw, 10 right gun shell, 11 changeable color block.

### 5. Specific Embodiment of the invention

The technical scheme of the invention is further described clearly and detailedly hereinafter with reference to the drawings. The drawings
The embodiment is illustrated hereinafter with reference to the overall structure of the invention.

### Embodiment 1

A charging gun that can realize changeable color according to temperature change and a preparation method thereof including a gun head 1, one end of said gun head 1 is provided with a silicone waterproof pad 2, and the rear side of the silicone waterproof pad 2 is connected with a terminal cover 3; the interior of said terminal cover 3 is connected with terminals 5, and the outer side of the terminals 5 are provided with terminal rubber coatings 6, and one end of said terminals 5 is connected with a terminal wiring harness 8; the outer side of the terminal 5 located at the outer side of the terminal rubber coating 6 is provided with a left gun shell 7, one side of the left gun shell 7 is connected with a right gun shell 10, and the first riveting screw 4 is provided between the left gun shell 7 and the right gun shell 10, and the second riveting screw 9 is connected between the left gun shell 7 and the right gun shell 10 on the side far away from the first riveting screw 4, and the outer side of both of left gun shell 7 and the right gun shell 10 are arranged with changeable color block 11.

Other positions that don't need to prompt temperature change adopts traditional injection molding process of injection molding in one shot (the position of changeable color block is left empty), the material for changeable color block is selected from 50°C red temperature-sensitive material, and 38°C orange temperature-sensitive material, and PC injection molding material, and the PC injection molding material according to the ratio of 1:200 added with red and orange temperature-sensitive material to fill the position of the changeable color block completely through secondary injection molding.

In the charging process of the charging gun, the terminal component in the gun head component is connected to cable and electrified, when charging abnormality happens (due to improper operation of operator or poor contact of charging gun), a large amount of heat is generated in a short period of time and can not been dissipated quickly, the cable will heat up, and the heat is transferred to various parts of the gun shell, the gun shell containing temperature-sensitive materials will change color.

Under normal circumstances, it's comfortable to use the charging gun to charge with temperature below 38°C , the changeable color block of the charging gun in this temperature range is orange, when the temperature is between 38°C to 50°C , the changeable color block of charging gun will gradually change from orange to red, when the charging gun shell is above 50°C, changeable color block will gradually change from red to colorless, when colorless color block appears, it means the charging gun is in abnormal state, reminding the user to pay attention to safety, please refer to the following table.

| Temperature | Below 38°C | 38°C -50°C | Above 50°C |
|---|---|---|---|
| Color | Orange | Gradually change from orange to red | Gradually change from red to colorless |
| Charging gun status | Normal, feel comfortable when charging | Normal | Abnormal |

The purpose of temperature-sensitive color change is to prompt the operator of the charging gun status, and temperature abnormality is prompted through the color block change of the charging gun so as to ensure operator's safety.

The contents not described in detail in this specification are prior art known to those skilled in the art.

The terms "center", "longitudinal", "lateral", "front", "back", "left", "right", "top", "bottom", "inside", "outside", and the like indicate orientation or positional relationships based on those shown in the accompanying drawings, solely for the purpose of facilitating the description of the invention and simplifying the description and are not intended to indicate or imply that the device or element referred to must have a particular orientation, be constructed and operated in a particular orientation, and therefore are not to be construed as limitations of the invention.

Although embodiments of the invention have been shown and described, it will be understood to those skilled in the art that a wide variety of changes, modifications, substitutions, and variations may be made to these embodiments without departing from the principle and spirit of the invention, should all fall within the protection scope of the invention.

## Claims

1. A charging gun that can realize changeable color according to temperature change including a gun head (1), one end of said gun head (1) is provided with a silicone waterproof pad (2), and the rear side of the silicone waterproof pad (2) is connected with a terminal cover (3); the interior of said terminal cover (3) is connected with terminals (5), and the outer side of the terminals (5) are provided with terminal rubber coatings (6), and one end of said terminals (5) is connected with a terminal wiring harness (8); the outer side of the terminal (5) located at the outer side of the terminal rubber coating (6) is provided with a left gun shell (7), one side of the left gun shell (7) is connected with a right gun shell (10), and the first riveting screw (4) is provided between the left gun shell (7) and the right gun shell (10), and the second riveting screw (9) is connected between the left gun shell (7) and the right gun shell (10) on the side far away from the first riveting screw (4), and the outer side of both of left gun shell (7) and the right gun shell (10) are arranged with changeable color block (11).

2. The charging gun that can realize changeable color according to temperature change of claim 1 wherein inside the terminal cover (3) is provided with limiting holes, and the terminals (5) penetrate through the limiting holes and extend to the inside of the gun head (1); there are a plurality groups of terminals (5) and limiting holes.

3. The charging gun that can realize changeable color according to temperature change of claim 1 wherein the top of said left gun shell (7) and right gun shell (10) are both provided with empty slots, and the empty slots are fixedly connected with the changeable color block (11) by injection molding.

4. A preparation method for the charging gun that can realize changeable color according to temperature change comprising the following steps:
Step 1: The gun shell is firstly injection molded as a whole, leaving the position of the changeable color block empty;
Step 2: completely filling the position of the changeable color block at the position of the changeable color block of the gun shell by secondary injection molding;
Step 3: assembling the gun head, silicone waterproof pad, terminal cover, terminal component, first riveting screw, second riveting screw, left gun shell, and right gun shell.

5. The preparation method for the charging gun that can realize changeable color according to temperature change of claim 4 wherein filling material for said changeable color block in step 2 is selected from 50°C red temperature-sensitive material, 38°C orange temperature-sensitive material and PC injection molding material.

6. The preparation method for the charging gun that can realize changeable color according to temperature change of claim 5 wherein said injection molding process is performing secondary injection molding to the PC injection molding material according to the ratio of 1:200 added with red and orange temperature-sensitive material to fill the position of the changeable color block completely.

7. The preparation method for the charging gun that can realize changeable color according to temperature change of claim 4 wherein the integral injection molding of the gun shell in step 1 adopts PC material, and the injection molding adopts the traditional injection molding process of injection molding in one shot.
